# EUROPÄISCHE PATENTSCHRIFT

(11) **EP 1 149 357 B1**
(45) Veröffentlichungstag und Bekanntmachung des Hinweises auf die Patenterteilung: **16.10.2002**
(21) Anmeldenummer: 00909143.0
(22) Anmeldetag: 03.02.2000
(51) Int. Cl.: G06K 19/06, G06K 19/14, G06K 19/16

(54) **INFORMATIONSTRÄGER**
INFORMATION CARRIER
SUPPORT D'INFORMATION

(30) Priorität: 03.02.1999 DE 19904282
(43) Veröffentlichungstag der Anmeldung: 31.10.2001
(73) Patentinhaber: Xetos AG, 82064 Strasslach (DE)
(72) Erfinder: KNÖDLER, Thomas, 82057 Icking (DE); EBERT, Dieter, D-81375 München (DE); WOYDICH, Horst, D-82515 Wolfratshausen (DE); KNOCKE, Frank, D-85560 Ebersberg (DE)
(74) Vertreter: Jacoby, Georg
(86) Internationale Anmeldenummer: EP0000870
(87) Internationale Veröffentlichungsnummer: WO00046746

(56) Entgegenhaltungen:
- EP-A- 0 552 564
- EP-A- 0 590 826
- DE-A- 2 431 992
- US-A- 5 284 364
- PATENT ABSTRACTS OF JAPAN vol. 1998, no. 14, 31. Dezember 1998 (1998-12-31) & JP 10 261062 A (TOSHIBA CORP), 29. September 1998 (1998-09-29)

## Beschreibung

Die Erfindung betrifft einen Informationsträger mit wenigstens einer Außenfläche zum Auslesen optisch lesbarer Information.

Derartige Informationsträger sind beispielsweise bedruckte Seitenblätter, Banknoten, Verpackungen, Aufkleber, Verpackungen, Bilder etc.. Auf diesen Materialien ist Information aufgedruckt oder sonstwie aufgebracht, die meist sichtbar ist (d.h. mit Licht im optisch sichtbaren Bereich lesbar bzw. darstellbar ist). Es kann aber auch Information im optisch nicht sichtbaren Bereich enthalten sein (z.B. mit UV- oder IR-Licht lesbare Information).

Dabei besitzen diese Informationsträger in der Regel wenigstens eine Außenfläche, auf welcher die enthaltene Information nach außen sichtbar ist. Bei bedruckten Papieren ist dies die bedruckte Seitenfläche des Papiers. Bei Reliefhologrammen, deren holografisch enthaltene Information in einer Reliefstruktur auf einer Außenfläche steckt, wird die holografisch enthaltene Information ebenfalls bei Betrachten dieser Außenfläche bzw. bei Beleuchten dieser Außenfläche mit bestimmten Lichtquellen sichtbar. Bei transparenten Informationsträgern kann die Information in geschwärzten oder lichtbeugenden bzw. brechenden Bereichen innerhalb des transparenten Materials liegen, so daß die Information von mehr als einer Außenfläche sichtbar wird. Bei quaderförmigen Informationsträgern können dies die sechs Außenflächen sein, während es bei folienartigen Informationsträgern lediglich die beiden gegenüberliegenden Folienseiten sind.

Diese Materialien sollen häufig gegen eine nachträgliche Manipulation bzw. ein Kopieren geschützt werden. Außerdem dienen solche Informationsträger auch als Sicherheitssie-gel, beispielsweise zum Kennzeichnen von Markenprodukten (elektronische Bauteile, Computerbauteile, pharmazeutische Erzeugnisse, Bild-, Ton- und Datenträger, Kleidungsartikel, etc.). Auch bei Banknoten besteht ein Bedürfnis nach Fälschungssicherheit. Hierzu wird Information über entsprechend aufwendige Verfahren auf den Informationsträger gebracht, die nicht so einfach über ein herkömmliches Kopiergerät zum Kopieren bedruckten Papiers auf einen anderen Informationsträger kopiert werden kann. So werden beispielsweise verstärkt Sicherheitssiegel mit holografisch gespeicherter Information eingesetzt, welche prinzipiell lediglich mit aufwendigen Laseraufbauten zum Erzeugen kohärenten Lichtes kopiert werden können. Es werden ebenfalls Metallfolien mit eingeprägtem Beugungsgitter verwendet, welche je nach Betrachtungswinkel Licht unterschiedlicher Farbe reflektieren.

Bei diesen Sicherheitssiegeln wie auch grundsätzlich bei bedrucktem Papier besteht häufig ein Bedürfnis nach einem erhöhten Kopierschutz, bzw. zumindest nach einem Merkmal, mit dem eine Kopie von dem Original unterschieden werden kann.

Die Patentschrift EP-A-0.552.564 zeigt einen Informationsträger zum optichen Auslesen von Information, wobei auf der Aussenfläche eine transparente Kopierschutzschicht aufgebracht ist, die die Polarisationsrichtung des Ausleselichtes dreht.

Dieses Dokument beschreibt den nächstliegenden Stand der Technik und definiert die Präambel des Anspruches 1.

Die Patentschrift US-A-5.284.364 zeigt einen Informationsträger, dessen Kopierschutzschicht Flächenabschnitte unterschiedlicher polarisatiosdrehender bzw. polarisationsfilternder Eigenschaften aufweist. Mit diesen Flächenabschnitten werden Informationsmuster dargestellt.

Der Erfindung liegt die Aufgabe zugrunde, eine Informationsträger mit erhöhtem Kopierschutz bzw. mit einem Merkmal zum Unterscheiden des Originals von der Kopie zu schaffen.

Die Erfindung löst diese Aufgabe mit dem Gegenstand des Anspruchs 1.

Bevorzugte Ausführungsbeispiele der Erfindung sind in den Unteransprüchen beschrieben.

Danach ist auf der wenigstens einen Außenfläche des Informationsträgers eine transparente Kopierschutzschicht mit einer die Polarisation des Ausleselichtes drehender und/oder filternder Eigenschaft aufgebracht. Der Vorteil dieser Kopierschutzschicht liegt darin, daß sie beispielsweise mit dem bloßen Auge nicht erkennbar ist. Wird der Informationsträger nun mit natürlichem Licht kopiert, so enthält die Kopie nicht mehr diese Kopierschutzschicht. Eine über Kopie und Original gelegte Polarisationsfolie (oder ein entsprechender Polarisator) kann bei entsprechender Ausrichtung die beiden voneinander unterscheiden, da das Original bei einer bestimmten Ausrichtung der Polarisationsfolie verdunkelt. Wird mit polarisiertem Licht kopiert, so kann bei bestimmter Ausrichtung die Information des Originals beispielsweise überhaupt nicht ausgelesen werden.

Der Informationsträger kann u.a. aus irgendeinem der eingangs genannten Materialien sein, beispielsweise eine Folie (z.B. in Form eines Sicherheitssiegels) oder ein massiveres Material, welches in Durchsicht teilweise transparent ist oder in wenigstens einer im Innern des Materials liegenden Zwischenschicht (Schichthologramm, Volumenhologramm, etc.) Information gespeichert hält. Die Information kann in Form einer das Ausleselicht reflektierenden, absorbierenden, brechenden und/oder beugenden Eigenschaft des Materials des Informationsträgers gespeichert sein.

Dabei kann die Information optisch sichtbar (d.h. im sichtbarem Licht erkennbar) oder unsichtbar (z.B. lediglich mit UV-Licht oder IR-Licht erkennbar) gespeichert sein. Die Information selbst kann als dreidimensionales Hologramm (räumliche Wiedergabe eines Objektes in voller dreidimensionaler Wiedergabe), zwei/dreidimensionales Hologramm (flächiges Motiv vor dreidimensionalem Hintergrund), zweidimensionales Hologramm (flächige Grafik) oder als Diffraktionsmuster (z.B. Beugungsstrukturen in Diffraktionsfolien) enthalten sein. Außerdem können je nach Betrachtungswinkel (Bewegungsabfolge bei Neigen der Informationsträger gegenüber der Beleuchtungsquelle) oder Beleuchtungsfarbe unterschiedliche Motive bzw. Informationen gespeichert sein.

Die optisch lesbare Information kann jede Art von Information umfassen, auch reine geometrische oder unregelmäßige, (scheinbar) zufällige Muster. Auf Metallfolien mit Diffraktionsmuster sind häufig völlig unregelmäßige Muster oder auch nur rein gleichmäßige Flächen enthalten, welche beispielsweise nur in den Regenbogenfarben schillern. Auch dieses "Farbspiel" stellt eine Information im Sinne der Erfindung dar.

Bevorzugt umfaßt die optisch lesbare Information des Informationsträgers eine holografisch aufgezeichnete Information. Der Begriff holografisch gespeicherte Information ist in dem Sinne zu verstehen, daß die Information als ganzes auch nur in Flächenabschnitten des Informationsträgers enthalten ist. Häufig wird Information in Form von Hologrammen auf Folien gespeichert, die wiederum zu Kopierschutzzwecken auf Produkten aufgeklebt werden. Diese sogenannten Sicherheitsiegel dienen der Authentifizierung des vertriebenen Produktes. Sicherheitssiegel in Form von Hologrammen beruhen auf optischen Beugungsstrukturen, die in die Folienschicht eingelagert sind. Je nach Beleuchtungs- und Blickwinkel nimmt der Betrachter unterschiedliche Farben, Muster und Motive wahr. Der Aufbau dieser Folienschichten und der technische Aufwand bei ihrer Produktion bieten einen wirkungsvollen Schutz vor einem einfachen Kopieren und damit vor einem Vertreiben von gefälschten Produkten mit dem kopierten Sicherheitssiegel.

Die holografisch gespeicherte Information ist besonders wirkungsvoll vor einem Kopieren geschützt, da zum Kopieren eines Hologramms grundsätzlich kohärente Lichtquellen verwendet werden müssen. Diese Lichtquellen haben zusätzlich die Eigenschaft, daß sie polarisiertes Licht (zirkular oder linear polarisiertes Licht) aussenden.

Ferner muß für das Kopieren ein Rekonstruktionsstrahl des Hologramms, welcher wenigstens einmal die Kopierschutzschicht passieren muß, mit einem nicht durch den Informationsträger (und damit die Kopierschutzschicht) hindurchgetretenen Referenzlichtstrahl interferieren. Interferenz tritt jedoch nur bei Lichtstrahlen auf, die nicht senkrecht zueinander polarisiert sind. Durch geeignete Wahl der Kopierschutzschicht kann diese den rekonstruktionslichtstrahl bzw. den anschließenden Objektstrahl gerade senkrecht zu dem Referenzstrahl polarisieren. Hat die Kopierschicht im wesentlichen reine polarisationsfilternde Eigenschaft, so wird der linear polarisierte Rekonstruktionsstrahl beispielsweise so stark gefiltert, daß er nicht mehr mit dem Referenzstrahl interferieren kann.

Zum Erhöhen der Kopiersicherheit weist die Kopierschutzschicht bevorzugt Flächenabschnitte unterschiedlicher polarisationsdrehender bzw. -filternder Eigenschaft auf. Eine zwischen ein derart hergestelltes Sicherheitssiegel als Informationsträger und die zum Kopieren verwendete Aufzeichnungsschicht eingeschobene polarisationsdrehende Folie zum Aufheben des Polarisationseffektes der Kopierschutzschicht kann nunmehr lediglich abschnittsweise Erfolg haben. Werden diese Flächenabschnitte dabei rein zufällig verteilt, so wird ein Kopieren nochmals erschwert. Selbst wenn das Hologramm nämlich mit einem Laserstrahl rasterförmig ausgelesen würde, müßte jeder ausgelesene Rasterpunkt des Objektstrahles wieder individuell in seiner Polarisation kompensiert werden. Dies ist jedoch mit technisch vernünftigem Aufwand nicht mehr möglich.

Bevorzugt stellen die Flächenabschnitte der Kopierschutzschicht zusammen gesehen ein Informationsmuster dar. Dieses Informationsmuster kann einerseits im Falle von Hologrammen unmittelbar auf eine Kopie hinweisen, in dem die polarisierenden Flächenabschnitte (oder deren Negativ) der Kopie beispielsweise Wörter "Fälschung", etc. einprägen. Andererseits kann im Falle von "normalen" Informationsträgern (wie bedrucktes Papier) auch eine zusätzliche Information (ein Muster, ein Bild oder eine Schrift, etc.) als Kopierschutz enthalten sein, die erst bei Beleuchtung der Kopierschutzschicht mit polarisiertem Licht (für den Fall, daß die Flächenabschnitte oder deren komplementären Flächen polarisationsfilternde Eigenschaften haben) oder bei Betrachtung durch ein Polarisationsfilter(für den Fall, daß die Flächenabschnitte oder deren komplementären Flächen polarisationsdrehende Eigenschaften haben) erkennbar wird.

Bevorzugt umfaßt das Informationsmuster der Kopierschutzschicht zumindest teilweise codierte Information. Neben der beispielsweise über eine Polarisationsfolie unmittelbar erkennbaren Information ist somit noch eine Information enthalten, die lediglich mit einem bestimmten beispielsweise auf der Polarisationsfolie enthaltenem Masterschlüssel erkennbar ist. Das gleiche gilt bevorzugt auch für die Information auf dem Informationsträger.

Ganz besonders bevorzugt ist die codierte Information der Kopierschutzschicht der Entschlüsselungsschlüssel für die codierte Information des Informationsträgers, oder umgekehrt. Dadurch wird die codierte Information nur dann sichtbar, wenn auch die Kopierschutzschicht exakt kopiert wird, was in der Regel technisch kaum realisierbar ist. In dem Informationsträger kann beispielsweise zusätzlich zu dem eigentlich erkennbaren Motiv ein Masterschlüssel codiert sein, der lediglich einen einheitlichen "Grauschleier" oder ähnliches über das Motiv legt, als solcher somit nicht erkennbar ist. Die Kopierschutzschicht enthält ebenfalls eine codierte Information, die ohne den Masterschlüssel lediglich als "Grauschleier" auftritt. Werden Informationsträger und Kopierschutzschicht mit Hilfe einer Polarisationsfolie oder ähnlichem betrachtet, so wird die verschlüsselte Information der Kopierschutzschicht durch die als Masterschlüssel codierte Information decodiert und entschlüsselt erkennbar.

Bevorzugt umfaßt bei Verwendung des Informationsträgers als Sicherheitssiegel die Information der Kopierschutzschicht und/oder des Informationsträgers zumindest teilweise individualiserte Information. Dabei kann insbesondere die codierte Information für das jeweilig zu sichernde Produkt individualisiert werden (z.B. durch eine fortlaufende Seriennummer, etc.). Das Einbringen eines individualisierten Codes ist bei der Produktion des als Sicherheitssiegel dienenden Informationsträger beispielsweise mittels einer transparenten Flüssigkristallanzeige (für den Fall, daß der Code in die Informationsträger eingebracht wird) technisch einfach realisierbar. Beim Kopieren muß dann jeder Sicherheitssiegel einzelnen kopiert werden, ein "Abdruck" eines Sicherheitssiegels als Masterkopie liefert nicht mehr die fortlaufende Seriennummer.

Zum Verhindern eines beschädigungsfreien Lösens der Kopierschutzschicht von dem Informationsträger ist diese mit Sollbruchstellen (z.B. Perforationen) oder mittels eines unlösbaren Klebeverfahrens (in die Schichten diffundierende Kleber, Aufschweißen, etc.) auf dem Informationsträger aufgebracht.

Bevorzugt ist ein Anteil der Flächenabschnitte der Kopierschutzschicht als transparente, die Polarisation nicht beeinflussende Löcher ausgebildet. Hiermit lassen sich technisch besonders einfach die unterschiedlichen Flächenabschnitte realisieren.

Zum weiteren Erhöhen des Kopierschutzes sind die Löcher bevorzugt mit Materialien gefüllt, die fluoreszierende, phototropische, licht-speichernde und/oder photothermische Eigenschaft haben. Durch entsprechendes Erwärmen, Bestrahlen mit geeigneter elektromagnetischer Bestrahlung werden diese Löcher also sichtbar, die bei einer einfachen Kopie der Kopierschutzschicht ohne Einbringen dieser Materialien nicht durch diese Maßnahmen aufleuchten.

Zum besseren Auslesen des Hologramms bzw. zum Erhöhen des Kopierschutzes ist der eine holografische Information enthaltende Informationsträger über eine weitere Außenfläche auf einer Leuchtfläche aufgebracht. Ganz besonders bevorzugt ist die Leuchtfläche aus einem elektrofluoreszierenden Material oder einem unter Mikrowellenbestrahlung Licht aussendenden Material. Somit wird das Hologramm auch im Dunkeln sichtbar, wenn der Informationsträger bzw. die Leuchtschicht mit entsprechenden elektromagnetischen Wellen bestrahlt werden oder eine Spannung an diese angelegt wird.

Zum Erzeugen einer "flächigen" Lichtquelle ist bevorzugt zwischen der weiteren Außenfläche des Informationsträgers und der Leuchtfläche eine Punktlichtmaske angeordnet.

Zum weiteren Erhöhen des Kopierschutzes ist/sind ein oder mehrere der verwendeten Materialien mit bestimmten Stoffen in bestimmten Mengenverhältnissen dotiert. Diese Stoffe und deren Mengenverhältnisse können anschließend wieder über eine Massenspektroskopie detektiert werden, in der Regel jedoch nur bei Kenntnis der eingebrachten Stoffe und deren Mengenverhältnis. Wird diese Information möglichst geheim gehalten, so ist eine Kopie praktisch unmöglich, bzw. läßt sich eine Kopie mit großer Zuverlässigkeit von dem Original unterscheiden.

Bevorzugt ist der Informationsträger die Außenfläche eines Spritzgußteiles, welche als Informationsträger zumindest abschnittsweise eine Oberflächenstruktur mit optisch beugenden Eigenschaften umfaßt. Somit kann ein Produkt besonders einfach dadurch geschützt werden, daß bereits in das spritzgegossene Gehäuseteil eine Oberflächenstruktur eingegossen wird, welche als Informationsträger dient (z.B. ein Hologramm darstellt etc.). Die Spritzgußform zum Herstellen dieses Spritzgußteiles weist hierzu bevorzugt eine Aussparung zur Aufnahme eines entsprechenden Prägestempels mit dieser Oberflächenstruktur als Negativ auf. Für weitere Details wird hierzu auf die parallele Anmeldung mit der Bezeichnung "Spritzgußteil, Spritzgußform und Spritzgußverfahren" derselben Anmelder verwiesen, die denselben Anmeldetag trägt, deren Offenbarung vollinhaltlich in die vorliegende Anmeldung übernommen wird.

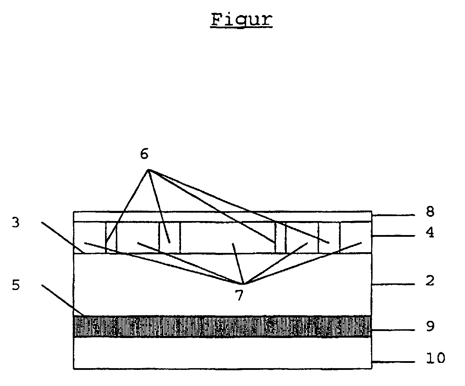

Die Erfindung und weitere Vorteile der Erfindung werden nunmehr anhand eines bevorzugten Ausführungsbeispiels mit Bezug auf die beigefügte Figur näher erläutert.

In der Figur ist eine schematische Darstellung eines Informationsträgers 2 mit beispielsweise holografisch gespeicherter Information gezeigt. Dieser Informationsträger 2 kann als Datenträger für eine große Mengen an Daten oder als Sicherheitssiegel dienen.

Grundsätzlich ist in der Holographie zwischen der Flächen- und der Volumenholographie zu unterschieden. Bei der Flächenholographie wird das Interferenzmuster lediglich in einer Ebene - z.B. einer Oberfläche des Informationsträgers 2 - gespeichert, während bei der Volumenholographie die Information auch noch in die Tiefe enthalten ist.

Die Produktion eines Informationsträgers 2 mit einem Flächenhologramm erfolgt ähnlich dem Pressen von Schallplatten. Als Original wird dabei eine Prägematrize mit einem das Hologramm als Interferenzmuster enthaltenden Oberflächenrelief verwendet, die anschließend chemisch mit einer Silberlösung versilbert oder im Hochvakuum mit einem Metallfilm bedampft wird. Der Metallfilm wird galvanisch verstärkt und von dem Original abgelöst, so daß ein Matrize entsteht, mit deren Hilfe beispielsweise thermoplastische Kunststoffe zu Phasenhologrammen geformt oder Prägematrizen hergestellt werden können.

Auf eine Außenfläche 3 dieses Informationsträgers 2 ist nunmehr eine Kopierschutzschicht 4 aufgeklebt. Über diese Außenfläche 3 wird das Hologramm ausgelesen, in dem beispielsweise ein Rekonstruktionsstrahl von außen auf diese Außenfläche 3 trifft, mit dem Beugungsmuster des Informationsträgers 2 interferiert und ein resultierender Objektstrahl den Informationsträger 2 wieder über die Außenfläche 3 verläßt (Reflektionshologramm). Es kann ebenfalls ein Rekonstruktionsstrahl auf die andere Außenfläche 5 des Informationsträgers 2 fallen und ein Objektstrahl die Außenfläche 3 verlassen (Transmissionshologramm).

Das Kleben der Kopierschutzschicht 4 auf den Informationsträger 2 kann dabei so erfolgen, daß ein Ablösen der Kopierschutzschicht 4 diese Schicht 4 und/oder den Informationsträger 2 wenigstens teilweise zerstört. Hierzu kann beispielsweise eine Perforation in die Kopierschutzschicht 4 eingebracht werden, welche diese beim Ablösen in kleinere Abschnitte zertrennt. Es kann ebenfalls ein Diffusionskleber eingesetzt werden. Dieser kann dabei so in den Informationsträger 2 und/oder die Kopierschutzschicht 4 diffundieren, daß deren optische Eigenschaften gezielt verändert werden. Somit kann mit dem gezielten Auftragen des Klebers bereits eine Information eingebracht werden.

Die Kopierschutzschicht 4 ist beispielsweise eine einfache transparente Kunststoffolie aus Zellophan, Polyurethan, Polypropylen o.ä. Solche Kunststoffolien drehen gewöhnlich die Polarisationsrichtung des Lichtes abhängig von ihrer Dicke.

Nachfolgend soll zum besseren Verständnis der Erfindung ein gängiges Kopierverfahen zum Kopieren von Hologrammen erläutert werden, die sogenannte Kontaktkopie. Wie in der gewöhnlichen Photographie wird der das Hologramm enthaltende Informationsträger 2 auf den Kopierträger (Aufzeichnungsmaterial) gelegt, auf welches das Hologramm kopiert werden soll. Würden die beiden Träger zum Kopieren des Hologramms nun mit nicht-kohärentem Licht (bzw. Licht zu kurzer Kohärenzlänge) bestrahlt, so wäre die erhaltene Kopie äußerst unbefriedigend. Streuung und der bei einer Kontaktkopie endliche Abstand der beiden Schichten verursachen beim Kopieren der im Mikrometer-Bereich vorliegenden Hologramm-Strukturen (Interferenzmuster) hohe Informationsverluste.

Das Kopieren erfolgt daher mit kohärentem Licht, das beispielsweise von einer Laserquelle stammt. Ein solches Licht ist grundsätzlich polarisiert (linear oder zirkular). Weiterhin wird aus Kohärenzgründen das zum Kopieren verwendete Laserlicht einer Laserquelle in zwei Strahlen aufgeteilt, den Rekonstruktionsstrahl zum rekonstruieren des holografisch gespeicherten Bildes und den Referenzstrahl zum Aufzeichnen einer Kopie des Hologramms in dem Aufzeichnungsmaterial.

Bei der Kontaktkopie ist zwischen einer Transmissionkopie und einer Reflektionskopie zu unterscheiden. Bei der Transmissionkopie befinden sich Laser und Aufzeichnungsmaterial auf gegenüberliegenden Seiten der Hologrammschicht, während sie sich bei der Reflektionskopie auf der gleichen Seite befinden. Das ausschließlich anwendbare Kopierverfahren beim Kopieren von beispielsweise Sicherheitssiegeln als Informationsträger 2 ist die Reflektionskopie, da das Sicherheitssiegel nicht ohne Beschädigung von seinem in der Regel nicht transparenten Träger gelöst werden kann. Eine Beschädigung des Sicherheitssiegels führt zwar nicht unweigerlich zum Verlust eines Informationsausschnittes, da jeder Bereich des Sicherheitssiegels prinzipiell die komplette Information trägt, dafür jedoch zu einer starken Einbuße im Kontrast des ausgelesenen Objektstrahles.

Bei der Reflektionskopie wird der von dem Rekonstruktionsstrahl ausgelesene Objektstrahl von dem Informationsträger 2 reflektiert und gelangt in das Aufzeichnungsmaterial, wo er mit einem weiteren Teil des ebenfalls als Referenzstrahls wirkenden Lichtstrahls der gleichen Laserquelle interferiert und aufgezeichnet wird.

Die aufgeklebte Kopierschutzschicht 4 verhindert nunmehr ein Kontaktkopieren des Hologramms des Informationsträgers 2 auf folgende Weise:

Bei der Kontaktkopie fällt der Rekonstruktionsstrahl zuerst durch die Kopierschutzschicht 4, wird dort in seiner Polarisation gedreht oder gefiltert und rekonstruiert das Hologramm des Informationsträger 2 in einen Objektstrahl. Der Objektstrahl gelangt wieder durch die Kopierschutzschicht 4 und wird abermals in seiner Polarisation gedreht oder gefiltert.

Das zweimal in seiner Polarisation gedrehte Objektlicht interferiert nunmehr mit dem noch nicht in seiner Polarisation veränderten Referenzstrahl des Laser in der Aufzeichnungsschicht. Dabei gilt, daß senkrecht zueinander polarisiertes Licht nicht miteinander interferiert. Bewirkt die Kopierschutzschicht 4 im günstigsten Fall eine Polarisation von 45°, so ist das Objektlicht nach zweimaliger Polarisation somit senkrecht zum Referenzstrahl polarisiert und kann mit diesem folglich nicht mehr interferieren. Im Ergebnis wird also keine Kontaktkopie hergestellt. Für andere von der Kopierschutzschicht 4 herbeigeführten Polarisationsdrehungen wird das Interferenzmuster entsprechend schwächer und führt damit zu einer sehr kontrastarmen Kopie.

Dies gilt auch für alle anderen Kopierarten, bei denen das zum Kopieren verwendete Lichtbündel in einen Rekonstruktions- und einen Referenzstrahl geteilt wird und der Rekonstruktionsstrahl durch die Kopierschutzschicht 4 gelangt, nicht jedoch der Referenzstrahl.

In die Kopierschutzschicht 4 werden vor und/oder nach dem Aufkleben auf den Informationsträger 4 Löcher 6 perforiert (z.B. mit einem Nadeldrucker, etc.). Diese Löcher 6 teilen die Kopierschutzschicht 4 somit in Flächenabschnitte 7 auf, welche das Licht weiterhin in seiner Polarisation drehen bzw. filtern, und in Flächenabschnitte 6 (die Löcher 6), welche die Polarisation des hindurch tretenden Lichtes nicht verändern. Die Löcher 6 können dabei in einem Muster angeordnet sein, daß eine codierte und/oder uncodierte Information trägt. Die uncodierte Information wird dabei erkennbar, wenn auf die Kopierschutzschicht 4 beispielsweise eine Polarisationsfolie aufgelegt wird, welche das Licht genau senkrecht zur Kopierschutzschicht 4 polarisiert. Damit erscheinen alle Flächenabschnitte 7 der Kopierschutzschicht 4, die keine Löcher 6 sind, als dunkle Abschnitte, während die Löcher 6 hell aufleuchten und ihre Information preisgeben.

Die von den Löchern 6 dargestellte Information kann auch zumindest teilweise als Entschlüsselungsschlüssel für eine codierte Information innerhalb des Informationsträgers 2 dienen. Die codierte Information im Informationsträger 2 kann dabei zusätzlich zu einem sichtbaren Hologramm vorliegen und als solche nicht erkennbar sein. Somit weiß der Kopierer überhaupt nichts von dem Vorhandensein codierter Information.

Ein möglich Codierung besteht darin, einen entweder dunklen oder hellen Pixel der zu codierenden Information mittels vier im Quadrat angeordneter Unterpixel des Informationsträgers 2 und der Kopierschutzschicht 4 darzustellen. Ein dunkler Pixel entspricht beispielsweise vier dunklen Unterpixeln, während ein heller Pixel zwei beliebigen hellen und zwei beliebigen dunklen Unterpixeln entspricht. Insgesamt werden die Unterpixel der einzelnen Schichten 2 und 4 jedoch stochastisch verteilt, so daß im Informationsträger 2 wie auch in der Kopierschutzschicht 4 (bei Betrachtung mit Polarisationsfolie oder -brille) lediglich ein gleichmäßiger Grauschleier erkennbar ist. Die einzige Bedingung ist, daß für einen hellen Pixel der zu codierenden Information die beiden dunklen Unterpixel jeder Schicht 2 und 4 zusammenfallen, während sie für einen entsprechenden dunklen Pixel gerade nicht zusammenfallen.

Diese Codierung kann auch lediglich zwischen der Kopierschutzschicht 4 und einer auflegbaren Polarisationsfolie angewandt werden. Somit werden die nicht die Polarisation drehenden Löcher 6 erst durch die aufgelegte Polarisationsfolie sichtbar, deren enthaltenes "graues" Pixelmuster zusammen mit dem "grauen" Pixelmuster der Löcheranordnung die Information erkennbar macht. So kann beispielsweise ein laufende Seriennummer in die codierte Information der Kopierschutzschicht 4 perforiert werden, die mit einer einheitlichen Polarisationsfolie als Masterentschlüsselungsschlüssel auslesbar ist. Die laufende Seriennummer kann aber auch in den Informationsträger 2 kodiert oder unkodiert eingebracht werden.

Die Löcher 6 können mit einem Material aufgefüllt werden, daß spezielle optische Eigenschaften hat. Es kann beispielsweise fluoreszierende, phototropische, photothermische Eigenschaft haben oder bei elektromagnetischer Bestrahlung (z.B. Hochfrequenz- oder Infrarotbestrahlung) sichtbares Licht aussenden. Zudem kann es auch lichtspeichernde Eigenschaft haben (Bakteriorhodopsin, etc.).

Außerdem können dem Material ausgewählte chemische Elemente, Verbindungen oder Stoffe im bestimmten Mengenverhältnis beigemengt werden. Diese Materialen können anschließend über eine Massenspektroskopie einzeln nach Art und Mengenverhältnis wieder bestimmt werden. Diese gezielte chemische "Dotierung" dient somit als Fingerabdruck der Folie. Alternativ oder zusätzlich können auch die übrigen Materialien der einzelnen Schichten mit Spurenelementen dotiert werden (beispielsweise ohne wesentliche Veränderung ihrer optischen Eigenschaften). Bei der im Prinzip unendlichen Kombinationsmöglichkeit von "Dotierungsstoffen" und deren Mengenanteilen ist es in der Regel unmöglich, ohne Kenntnis der Art der vorliegenden "Dotierungsstoffe" diese und deren Mengenanteil zu bestimmen. Eine entsprechende Auswertung des Massenspektrogramms setzt in der Regel Kenntnis der zu detektierenden Stoffe voraus. Die Anmelder behalten sich vor, diese spezielle Dotierung von kopierzuschützenden Informationsträgern (ohne Kopierschutzschicht 4) getrennt weiterzuverfolgen.

Dieses Material wird beispielsweise flüssig auf die perforierte Kopierschutzschicht 4 aufgetragen und anschließend wieder abgeschabt, so daß lediglich das Material in den Löchern 6 verbleibt.

Auf die Kopierschutzschicht 4 ist eine transparente Versiegelungsschicht 8 zum Schutz der Kopierschicht 4 und des Informationsträgers 2 aufgebracht.

Der Informationsträger mit Hologramm ist selbst optional mit seiner Außenfläche 5 über eine Punktlichtmaske 9 auf einer Leuchtschicht 10 aufgebracht.

Die Leuchtschicht 10 kann aus einem elektrofluoreszierenden Material sein und beleuchtet das Hologramm in dem Informationsträger 2 von unten nach Anlegen einer Spannung an die Leuchtschicht 10 (Elektrolumineszenz-Effekt). Sie kann ebenfalls aus einem Material sein, daß beispielsweise bei Mikrowellenbestrahlung im sichtbaren Bereich leuchtet.

Die Punktlichtmaske 9 dient der flachen Ausleuchtung des Informationsträgers 2. Voraussetzung für die Rekonstruktion des darin enthaltenen Hologramms ist nämlich, daß Licht aus einer gezielten Richtung kommt. Besteht das Hologramm aus mehreren Elementen, denen jeweils ein transparenter Punkten der Punktlichtmaske gegenüberliegt, so wird jedes Element praktisch von einer eigenen Referenzlichtquelle als Rekonstruktionslichtquelle ausgeleuchtet.

## Patentansprüche

1. Informationsträger (2) mit wenigstens einer Außenfläche (3) zum Auslesen optisch lesbarer Information, wobei auf der wenigstens einen Außenfläche (3) eine transparente Kopierschutzschicht (4) mit einer die Polarisation des Ausleselichtes drehender und/oder filternder Eigenschaft aufgebracht ist, die optisch lesbare Information eine holografisch aufgezeichnete Information umfaßt, **dadurch gekennzeichnet, daß** die Kopierschutzschicht (4) Flächenabschnitte (6,7) unterschiedlicher polarisationsdrehender bzw. -filternder Eigenschaft aufweist, diese Flächenabschnitte (6,7) zusammen gesehen ein Informationsmuster darstellen und dieses Informationsmuster zumindest teilweise codierte Information umfaßt, und daß die Information auf dem Informationsträger (2) ebenfalls zumindest teilweise codierte Information umfaßt, wobei die codierte Information der Kopierschutzschicht (4) der Entschlüsselungsschlüssel für die codierte Information des Informationsträgers (2) ist, oder umgekehrt.

2. Informationsträger (2) nach Anspruch 1, **dadurch gekennzeichnet, daß** bei Verwendung des Informationsträgers (2) als Sicherheitssiegel die (codierte) Information der Kopierschutzschicht (4) und/oder des Informationsträgers (2) zumindest teilweise individualisierte Information umfaßt.

3. Informationsträger (2) nach einem der vorhergehenden Ansprüche, **dadurch gekennzeichnet, daß** die Kopierschutzschicht (4) über Sollbruchstellen oder mittels eines unlösbaren Klebeverfahrens auf der Außenfläche (3) des Informationsträgers (2) aufgebracht ist.

4. Informationsträger (2) nach einem der vorhergehenden Ansprüche, **dadurch gekennzeichnet, daß** ein Anteil der Flächenabschnitte (6,7) der Kopierschutzschicht (4) als transparente, die Polarisation nicht beeinflussende Löcher (6) ausgebildet ist.

5. Informationsträger (2) nach Anspruch 4, **dadurch gekennzeichnet, daß** die Löcher (6) mit Materialien gefüllt sind, die fluoreszierende, phototropische, licht-speichernde und/oder photothermische Eigenschaft haben.

6. Informationsträger nach einem der vorhergehenden Ansprüche, **dadurch gekennzeichnet, daß** der die holografische Information enthaltende Informationsträger (2) über eine weitere Außenfläche (5) auf einer Leuchtfläche (10) aufgebracht ist.

7. Informationsträger (2) nach Anspruch 6, **dadurch gekennzeichnet, daß** die Leuchtfläche (10) aus einem elektrofluoreszierenden Material oder einem unter Mikrowellenbestrahlung Licht aussendenden Material ist.

8. Informationsträger (2) nach Anspruch 6 oder 7, **dadurch gekennzeichnet, daß** zwischen der weiteren Außenfläche (5) des Informationsträgers (2) und der Leuchtfläche (10) eine Punktlichtmaske (9) angeordnet ist.

9. Informationsträger (2) nach einem der vorhergehenden Ansprüche, **dadurch gekennzeichnet, daß** ein oder mehrere der verwendeten Materialien mit bestimmten Stoffen in bestimmten Mengenverhältnissen dotiert ist/sind.

10. Informationsträger (2) nach einem der vorhergehenden Ansprüche, **dadurch gekennzeichnet, daß** der Informationsträger (2) die Außenfläche eines Spritzgußteiles ist, welche als Informationsträger zumindest abschnittsweise eine Oberflächenstruktur mit optisch beugenden Eigenschaften umfaßt.

## Claims

1. An information carrier (2) having at least one outer face (3) for reading out optically legible information, wherein a transparent copy protection layer (4) having a property which rotates and/or filters the polarisation of the reading-out light is applied to the at least one outer surface (3), the optically legible information comprises a holographically recorded item of information,
**characterised in that** the copy protection layer (4) comprises surface sections (6, 7) having different polarisation-rotating or polarisation-filtering properties, these surface sections (6, 7) when seen together represent an information sample and this information sample comprises at least partially coded information,
and **in that** the information on the information carrier (2) also comprises at least partially coded information, wherein the coded information of the copy protection layer (4) is the decryption key for the coded information of the information carrier (2), or vice versa.

2. An information carrier (2) according to Claim 1,
**characterised in that** when using the information carrier (2) as a security seal the (coded) information of the copy protection layer (4) and/or of the information carrier (2) comprises at least partially individualised information.

3. An information carrier (2) according to one of the preceding Claims,
**characterised in that** the copy protection layer (4) is applied via predetermined breaking points or by means of a non-detachable bonding process to the outer surface (3) of the information carrier (2).

4. An information carrier (2) according to one of the preceding Claims,
**characterised in that** a portion of the surface sections (6, 7) of the copy protection layer (4) is constructed as transparent holes (6) which do not influence polarisation.

5. An information carrier (2) according to Claim 4,
**characterised in that** the holes (6) are filled with materials which have fluorescent, phototropic, light-storing and/or photothermal properties.

6. An information carrier according to one of the preceding Claims,
**characterised in that** the information carrier (2) containing the holographic information is applied to a luminous surface (10) via another outer surface (5).

7. An information carrier (2) according to Claim 6,
**characterised in that** the luminous surface (10) is made from an electrofluroescent material or a material that emits light under microwave radiant exposure.

8. An information carrier (2) according to Claim 6 or 7,
**characterised in that** a punctiform light mask (9) is disposed between the further outer surface (5) of the information carrier (2) and the luminous surface (10).

9. An information carrier (2) according to one of the preceding Claims,
**characterised in that** one or more of the materials used is/are doped with specific materials in specific quantity ratios.

10. An information carrier (2) according to one of the preceding Claims,
**characterised in that** the information carrier (2) is the outer surface of an injection moulded part, which as the information carrier at least in some sections comprises a surface structure having optically diffractive properties.

## Revendications

1. Support d'information (2) comprenant au moins une surface extérieure (3) pour la lecture d'une information lisible par voie optique, dans lequel une couche transparente de protection contre la copie (4) ayant une propriété de distorsion et/ou de filtrage de la polarisation de la lumière de lecture est déposée sur la surface extérieure (3) au moins au nombre de une, et l'information lisible par voie optique comprend une information réalisée par voie holographique, **caractérisé en ce que** la couche de protection contre la copie (4) présente des sections de surface (6, 7) ayant des propriétés différentes de distorsion ou de filtrage de la polarisation, ces sections de surface (6, 7) vues ensemble forment un modèle d'information et ce modèle d'information comprend des informations au moins en partie codées, et **en ce que** l'information sur le support d'information (2) comprend également des informations au moins en partie codées, les informations codées de la couche de protection contre la copie (4) étant la clé de décryptage pour les informations codées du support d'information (2) ou inversement.

2. Support d'information (2) selon la revendication 1, **caractérisé en ce que**, en cas d'utilisation du support d'information (2) comme sceau de sécurité, les informations (codées) de la couche de protection contre la copie (4) et/ou du support d'information (2) comprennent des informations au moins en partie individualisées.

3. Support d'information (2) selon l'une des revendications précédentes, **caractérisé en ce que** la couche de protection contre la copie (4) est déposée sur la surface extérieure (3) du support d'information (2) au moyen de points destinés à la rupture ou d'un procédé de collage indétachable.

4. Support d'information (2) selon l'une des revendications précédentes, **caractérisé en ce qu'**une partie des sections de surface (6, 7) de la couche de protection contre la copie (4) sont réalisées comme trous (6) transparents n'influençant pas la polarisation.

5. Support d'information (2) selon la revendication 4, **caractérisé en ce que** les trous (6) sont remplis de matériaux qui ont des propriétés fluorescentes, phototropiques, à mémoire de lumière et/ou photothermiques.

6. Support d'information selon l'une des revendications précédentes, **caractérisé en ce que** le support d'information (2) contenant l'information holographique est déposé sur une surface extérieure (5) supplémentaire sur une surface lumineuse (10).

7. Support d'information (2) selon la revendication 6, **caractérisé en ce que** la surface lumineuse (10) est réalisée dans un matériau électrofluorescent ou dans un matériau émettant de la lumière sous la projection de micro-ondes.

8. Support d'information (2) selon l'une des revendications 6 ou 7, **caractérisé en ce qu'**une masse lumineuse ponctuelle (9) est agencée entre la surface extérieure (5) supplémentaire du support d'information (2) et la surface lumineuse (10).

9. Support d'information (2) selon l'une des revendications précédentes, **caractérisé en ce qu'**un ou plusieurs des matériaux utilisés sont dopés par certaines substances dans des rapports de quantité déterminés.

10. Support d'information (2) selon l'une des revendications précédentes, **caractérisé en ce que** le support d'information (2) est la surface extérieure d'une pièce moulée par injection qui comprend comme support d'information, au moins dans certaines parties, une structure superficielle ayant des propriétés de diffraction optique.
